# EUROPEAN PATENT APPLICATION

(11) **EP 2 894 643 A1**
(43) Date of publication of application: **15.07.2015**
(21) Application number: 12884062.6
(22) Date of filing: 06.09.2012
(51) Int. Cl.: H01G 11/32

(54) **ELECTRIC DOUBLE-LAYER PULSE CAPACITOR**

(71) Applicant: Obschestvo s ogranichennoy otvetstvennostyu 'Tovarischestvo energeticheskikh i electromobilnikh proektov', Moscow 127018 (RU)
(72) Inventor: DASHKO, Oleg Grigorievich, Moskovskaya oblast g. Korolev 141077 (RU); DOLGOLAPTEV, Anatoly Vasilyevich, Moskovskaya oblast pos. Pestovo 140071 (RU); BULDYAEV, Alexander Fedorovich, Moskovskaya oblast g. Schelkovo 141100 (RU); SHKOLNIKOV, Evgeniy Iosifovich, Moscow 115419 (RU); KREPAK, Oleg Veniaminovich, Moskovskaya oblast Moscow 109396 (RU); SMIRNOV, Viktor Aleeksevich, Moscovskaya oblast Podolsk 142117 (RU)
(74) Representative: Maiwald Patentanwalts GmbH
(86) International application number: PCT/RU2012/000743
(87) International publication number: WO 2014/038972

(57) **Abstract**

Description of a double electric layer capacitor comprising a body with extracting bipolar and end unipolar electrodes arranged in it, separators and electrolyte, wherein each electrode includes a separator made from a thermally expanded graphite and impregnated with high-molecular hydrocarbon, on which an electrode material consisting of a mixture of activated carbon and proton-conductive binder is applied to on both sides of the extracting electrodes and on one side of the end electrodes.

## Description

### Field of Invention

This invention relates to designing energy-storage electric capacitors, wherein the charge is accumulated at the interface between two media, namely, an electrode and electrolyte, accordingly named as "capacitors with double electric layer", and "super capacitors", "hybrid capacitors" (Japan), "ultra capacitors" (Germany, USA), "electrochemical capacitors: (France, Canada), "ionistors" (Russia and other CIS countries).

Their main advantage over conventional electrolytic capacitors consists in an augmented energy density. Certain types of such capacitors can store a more than 10 kJ/kg and discharge to a load at a specific capacitance of 1 to 10 kW/kg (www.kite.ru/articles/condenser/2005_6_12.php).

To this must be added the ample possible quantity of "charge-discharge" cycles, reliability and durability, and a wide operating temperature range.

The above said unique composition of features of capacitors having double electrical layer to a large extent predetermine possibility and practicability of their use, first of all in the transport electrical and hybrid means. The other promising direction is their use as "compensators" in power plants having unstable characteristics, e.g., wind-mill electric generating units, power generating units with solar cell batteries, tidal power plants.

### Background Art

Double electrical layer capacitors differ in type of electrode materials used in them, and in electrolytes employed. The materials used for electrodes are of the following three types: the materials based on activated carbon, metal oxides, and conductive polymers. An electrolyte can be aqueous or organic.

The most commonly encountered double electric layer capacitors are those having the electrodes basically made from the activated carbon materials.

It is known that the activated (highly porous) carbon materials provide for a capacitance density of about 10 F/cm³ and more (http://www.electrosad.ru/Electronics/SuperCon.htm). There is known a double electric layer capacitor, the electrode of this capacitor is made from a mixture of activated carbon (graphite, carbon black) particles, porous elastic dielectric and plastic binder (WO 94/01879). Activated carbon consists of a mixture of coarse particles (1-100 µm) and fine particles (0.05 to 1 µm).

The content of fine particles is within 10 to 60 wt%, particles of porous foam being of 1 to 50 µm in size or fibers of porous dielectric materials being 0.3 to 50 µm in diameter and 0.1 to 5 mm long are used as flexible dielectric, plastic binders, such as polyvinyl alcohol, polysaccharides, rubber, fluorine plastics, are used as plastic binders.

However, the capacitor assembled with the use of these electrodes has low capacity, sufficiently large resistance due to the use of a porous elastic dielectric material and relatively low mechanical strength. Said disadvantages are to a certain extent eliminated in the electrode (as per RF Patent # 2172037), made from a sorbent, e.g. activated carbon, bound by particles of a thermoplastic polymer uniformly distributed between the particles of activated carbon and having an average size of 0.08 to 0.9 of the average size of the activated carbon particles.

The electrode of this Patent also can be made from the activated carbon and graphite and carbon black powder, both bound by particles of a polymer. At this/ for more uniform distribution of particles over the entire volume of the electrode, these particles of graphite or carbon black shall have an average size of 0.02 to 1.4 of the average size of activated carbon particles.

Yet, in one embodiment of the electrode described in the RF Patent # 2172037, the electrodes can additionally comprise an activated carbon fabric bound to their surface at one or both sides by means of the particles of a polymer. At this, the average size of a thread of said fabric is 0.2 to 0.5 of the average size of the particles of the sorbent. However, this electrode has insufficient strength, and the technology of its manufacturing is rather complicated. The activated carbon fabric is placed into a mould, then a homogenous mixture of loose sorbent and a polymer is poured therein. In the case of making a bipolar electrode, the carbon fabric is placed over, get pressed, and then it undergo a thermal treatment. Thereafter, the mould is cooled, and ready-made electrode is removed.

The RF Patent # 2364974 discloses a capacitor, the polarized electrode of which is made from two types of activated carbon, one of which is steam-activated and the other one is activated by alkali.

### Summary of the Invention

In spite of a series of previously proposed solutions on reducing the internal resistance of double electric layer capacitors and increasing their capacity, this problem remains operative.

The present invention is aimed at solving this problem, and its essence consists in combining the carbon materials used for manufacturing the electrodes. In the present invention such a combination involves a thermally expanded graphite and activated carbon. According to the present invention, the design of the capacitor electrode is a separator made from thermally expanded graphite to which a mixture of activated carbon and a polymer (proton-conductive) binder is applied. This mixture is applied to the extracting (bipolar) electrodes on both sides of the separator made from thermally expanded carbon, while in the case of the end (unipolar) electrodes it is applied only to one side.

Electrode material (a mixture of activated carbon and a binder) is applied to the separators of the electrodes in a layer being 0.05 to 0.50 mm thick. At this, there shall be provided a pore size corresponding to the type of the electrolyte being used in the capacitor.

The content of activated carbon in the electrode material can be varied from 60 to 95 wt%, and that one of the binder, from 5 to 40 wt%, respectively.

### Brief Description of Drawings

Figure 1 depicts a sectional view of the capacitor described in the present invention.
Figure 2 shows a bipolar (extracting) electrode.
Figure 3 shows a unipolar (end) electrode.
Figures 4 and 5 depict an embodiment of electrodes provided with an insulating (sealing) gasket.

### Detailed Description of the Invention

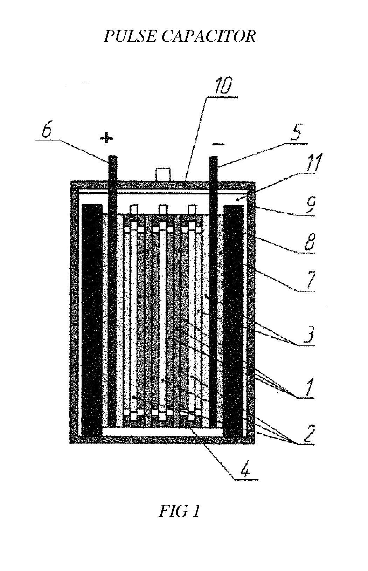

Let us see Figure 1, representing the capacitor made in accordance with the present invention. It includes a plurality of bipolar (extracting) electrodes (1), and two unipolar (end) electrodes (3), set apart by separators (2). The assembly of these electrodes is arranged in a body (9), through a cover (10) of which negative terminal (5) and positive terminal (6) is brought out.

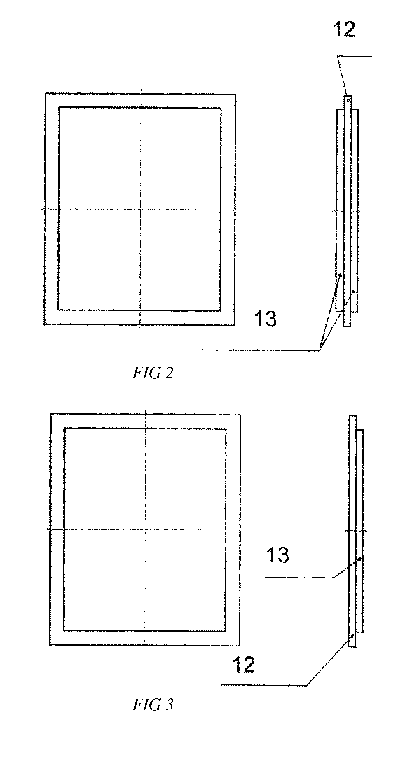

As shown in Figures 2 and 3, the electrodes represent a separator (12), made from thermally expanded graphite to which a layer of electrode material (13) is applied. The electrode material is applied to both sides of the separator of the extracting electrode, and in the case of the end electrode, to one side of the separator.

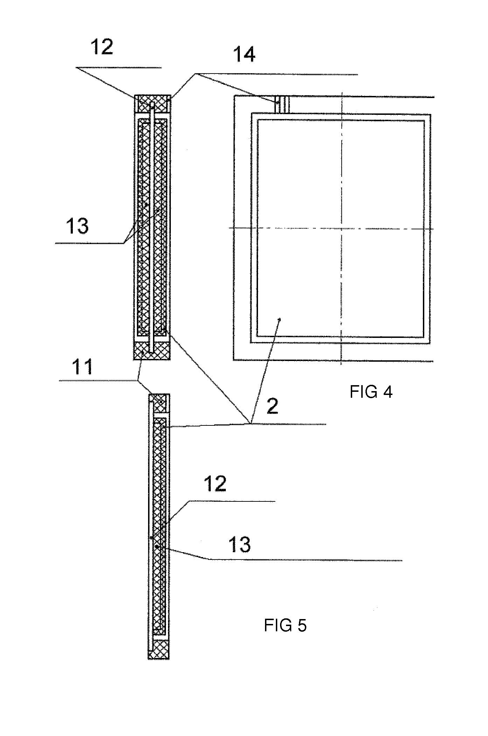

The embodiment of the electrodes manufacturing shown in Figures 4 and 5 additionally represents a sealing gasket (4) wrapped around the electrodes, it has grooves (14) made in it for air escape.

The capacitor is assembled with observance of the following sequence.

Separators (12) are made from a thermally expanded carbon; these separators are impregnated with a high-molecular carbon. The thermally expanded carbon can be a material named "Grafleks" («Γpaφπeκc») produced by the Unichimtek ( 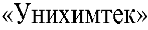 ) company, Russia; and the high-molecular carbon is used ceresin. The impregnation process is performed in a vacuum cabinet at a temperature of 110 to 140°C and a vacuum of 0.5 to 0.8 kg/cm². Upon completion of impregnation the excessive ceresin is removed by rolling between heated rolls.

The electrodes are made by performing the following steps:
- preparation of electrode material consisting from activated carbon and aqueous solution a proton-conductive ion-retardation resin (for example, Nafion DE 1020). The activated carbon and proton-conductive binder (resin) are taken in amount of 60-95 wt % and 5-40 wt %, respectively;
- applying by means of an aerograph and using a printed-circuit wiring method the required thickness layer (from 0.05 to 0.50 mm) of electrode material to the separator (12) - on both sides of extracting electrodes and on one side of end electrodes;
- drying the electrode material.

Depending on the type of electrolyte being used in the capacitor the activated carbon porosity is selected to be proportionate to the size of ions of electrolyte.

The manufactured electrodes are impregnated in the electrolyte having a density of 1.25 to 1.28 g/cm³.

Next, a sealant (gasket) (4), made from elastic acid-resistant sealing material, is attached to the electrode separator, on this sealant (gasket) grooves (14) are made providing air escape when the capacitor gets pressed. The end electrodes have such a gasket on one side.

The separator sheets are made from chemically resistant highly-porous and electrolyte permeable material having dimensions exceeding the inner dimensions of the sealant (Gasket) by 4 - 10 mm.

The capacitor elements are assembled as follows.

Placed on a process-oriented base plate in a sequential order are:
- a force plate (8);
- an insulator (7);
- a lead (5);
- an end electrode (3);
- a separator (2) (the separator lie down on the gasket of the end and bipolar electrodes with an overlap of 2 to 5 mm over outline);
- a bipolar electrode (1);
- a separator (2) etc..;
- placed on the last separator are an end electrode;
- a lead (6);
- an insulator;
- a force plate;
- the upper force plate is placed over the entire assembly.

All the elements are pressed in with a specific pressure of 8 to 10 kg/cm².

When the capacitor elements get pressed the air gets out of the electrode interspace through the grooves in the gaskets (4) until the gaskets become compressed to a depth of grooves of 0.2 to 0.5 mm and close the output. At this moment all the elements tough each other, and then the capacitor is additionally pressed to 0.1 - 0.2 mm on each cell till complete sealing of the capacitor. 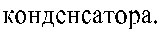

The force plates (8) are connected by ties (not shown) using welding or screws.

A sealant (11) (tentatively, on the basis of epoxy resin with a filler or a bitumen mastic) is poured in the body (9) and the assembled capacitor is placed therein. The required quantity of sealant is additionally poured over.

The cover (10) and the body (9) are coupled by heat sealing.

## Claims

1. A pulse capacitor with double electrical layer comprising a body and extracting (bipolar) and end (unipolar) electrodes arranged in it, separators and electrolyte, wherein each electrode includes a separator made from a thermally expanded graphite, and impregnated with high-molecular hydrocarbon" to which a material consisting of a mixture of activated carbon and a proton-conductive binder is applied on both sides of the extracting electrodes and on one side of the end electrode.

2. A pulse capacitor of claim 1, wherein the content of electrode material activated carbon is 60 to 95 wt%, and the content of proton-conductive binder is 5 to 40 wt%.

3. A pulse capacitor of claim 1 or claim 2, wherein the electrode material forms on the separators of the electrodes a 0.05 to 0.50-mm thick layer having the sized of pores from 0.5 to 2.5 nm depending on the electrolyte type.

4. A pulse capacitor of any of claims 1 - 3, wherein a layer of sealant, in which grooves for air escape on crimping the assembly of electrodes and separators, is applied to the edges of the separators of the electrodes.
